# EUROPÄISCHE PATENTSCHRIFT

(11) **EP 2 060 988 B1**
(45) Veröffentlichungstag und Bekanntmachung des Hinweises auf die Patenterteilung: **13.10.2010**
(21) Anmeldenummer: 08018021.9
(22) Anmeldetag: 15.10.2008
(51) Int. Cl.: G06F 21/00

(54) **Sicherheitsmodul**
Safety module
Module de sécurité

(30) Priorität: 16.11.2007 DE 102007055248
(43) Veröffentlichungstag der Anmeldung: 20.05.2009
(73) Patentinhaber: secunet Security Networks Aktiengesellschaft, 45128 Essen (DE)
(72) Erfinder: Martius, Kai, Dr., 01738 Dorfhain (DE); Dornseifer, Uwe, Dipl.-Ing., 53175 Bonn (DE)
(74) Vertreter: Rohmann, Michael

(56) Entgegenhaltungen:
- WO-A-00/67097
- US-A- 5 623 637
- MENEZES ET AL: "Handbook of Applied Cryptography" HANDBOOK OF APPLIED CRYPTOGRAPHY; [CRC PRESS SERIES ON DISCRETE MATHEMATICES AND ITS APPLICATIONS], BOCA RATON, FL, CRC PRESS.; US, 1. Januar 1997 (1997-01-01), Seiten 524-525, XP002139553 ISBN: 978-0-8493-8523-0
- KERSTIN LEMKE: "Embedded Security: Physical Protection against Tampering Attacks" EMBEDDED SECURITY IN CARS SECURING CURRENT AND FUTURE AUTOMATIVE IT APPLICATIONS, 28. März 2006 (2006-03-28), Seiten 207-217, XP002517192 Springer Berlin Heidelberg ISBN: 978-3-540-28384-3 [gefunden am 2009-02-27]
- ANDERSON R ET AL: "TAMPER RESISTANCE - A CAUTIONARY NOTE" PROCEEDINGS OF THE USENIX WORKSHOP OF ELECTRONIC COMMERCE, XX, XX, 1. November 1996 (1996-11-01), Seiten 1-11, XP000923039

## Beschreibung

Die Erfindung betrifft ein Verfahren zur gesicherten Verwahrung bzw. Aufbewahrung von sensiblen bzw. vertraulichen und folglich schützenswerten Daten. Bei solchen schützenswerten Daten kann es sich insbesondere auch um Software, Firmware, Schlüssel oder andere Parameter handeln. In verschiedensten technischen Bereichen und insbesondere in der Informationstechnologie besteht das Bedürfnis, sensible Daten sicher zu verwahren, so dass unberechtigte Zugriffe und unberechtigte Manipulationen dieser Daten vermieden werden. In diesem Zusammenhang ist es bekannt, schützenswerte Daten in verschiedensten Formen zu verschlüsseln bzw. zu sichern. Die in diesem Zusammenhang verwendeten Schlüssel, kryptografische Parameter oder kryptografische Funktionen stellen selbst schützenswerten Daten dar. Ferner ist es bekannt, in einer technischen Baugruppe, z. B. einem Rechner, bestimmte Programme in Form von Software oder auch Firmware einzusetzen, wobei derartige Programme entscheidend die Funktionalität einer solchen Baugruppe, z. B. eines Rechners, bestimmen. Auch in diesem Zusammenhang besteht das Bedürfnis, derartige Software und/oder Firmware zuverlässig zu schützen.

Grundsätzlich ist es bekannt, im Zusammenhang mit der Authentifikation bzw. Zugriffsberechtigung verschiedener Nutzer Chipkarten in Form von SmartCards einzusetzen, welche heutzutage nicht nur als reine Speicherkarten, sondern auch als intelligente Chipkarten ausgebildet sein können, die meist für eine PIN-Speicherung und -überprüfung verwendet werden, Innerhalb derartiger SmartCards werden häufig selbst Verschlüsselungsverfahren eingesetzt, um einen unberechtigten Zugriff auf die innerhalb der SmartCard gespeicherten Daten zu verhindern. Der Speicherplatz auf derartigen SmartCards ist jedoch begrenzt und die Verarbeitungsgeschwindigkeit gering.

Aus US 5,623,637 ist eine Speicherkarte bekannt, die über eine PCMCIA-Schnittstelle mit einem Computer verbindbar ist. In der Speicherkarte ist eine SmartCard mit einem gespeicherten Passwort angeordnet, so dass für einen Benutzer die in der Speicherkarte abgelegten Daten lediglich nach der Eingabe eines mit dem in der SmartCard abgelegten, übereinstimmenden Passworts abrufbar sind. WO 00/67097 A1 betrifft eine an einen Computer anschließbare Speichervorrichtung mit einem Speicher. Die Daten in dem Speicher können verschlüsselt sein, wobei der Schlüssel nur über eine SmartCard bezogen werden kann. Weiterhin ist das Aufteilen eines Geheimnisses in verschiedene Teile bekannt, wobei die verschiedenen Teile unterschiedlichen Nutzern übermittelt werden. Auf diese Weise kann die Sicherheit insgesamt erhöht werden (Menezes et al, Handbook of Applied Cryptography, Boca Raton, FL, CRC Press.; US, 01. Januar 1997, Seite 524). Sicherheitssensoren, die die Zerstörung bzw. Beschädigung eines Bauteils überwachen und ein Computersystem außer Kraft setzen, sind aus Kerstin Lemke, Embedded Security: Physical Protection against Tampering Attacks, Springer Berlin Heidelberg, 28. März 2006, Seite 207 bis 217 bekannt.

Der Erfindung liegt die Aufgabe zugrunde, ein Verfahren der eingangs beschriebenen Art zu schaffen, welches eine besonders sichere Verwahrung sensibler bzw. vertraulicher Daten selbst in größeren Mengen ermöglicht.

Zur Lösung dieser Aufgabe lehrt die Erfindung ein Verfahren zur gesicherten Verwahrung von Daten, wobei ein Sicherheitsmodul eingesetzt wird, das zumindest ein fest verschlossenes Gehäuse und zumindest einen in dem Gehäuse angeordneten Speicher für die zu verwahrenden Daten sowie zumindest eine in dem Gehäuse fest installierte Geräte-Chipkarte aufweist,
wobei an eine in oder an dem Gehäuse angeordnete Schnittstelle ein Chipkarten-Lesegerät angeschlossen wird, in welches eine oder mehrere Nutzer-Chipkarten einsteckbar sind, wobei über eine Schnittstelle Daten nach Überprüfung ihrer Authentizität, Integrität und/oder Vertraulichkeit in den Speicher eingegeben und über welche in dem Speicher gesicherten Daten nach Überprüfung der Nutzerberechtigung ausgegeben werden,
wobei die eingegebenen Daten mittels zumindest eines Modulschlüssels verschlüsselt bzw. gesichert in dem Speicher gespeichert werden,
wobei der Modulschlüssel aus zumindest einem auf der Geräte-Chipkarte hinterlegten ersten Modul-Teilschlüssel und einem auf der Nutzer-Chipkarte hinterlegten zweiten Modul-Teilschlüssel zusammengesetzt ist,
wobei dem Gehäuse ein oder mehrere Sicherheitssensoren zugeordnet sind, welche mit einem in dem Gehäuse angeordneten Sicherheitscontroller verbunden sind, wobei in dem Sicherheitscontroller ein dritter Modul-Teilschlüssel hinterlegt ist und wobei der Modulschlüssel zusätzlich diesen dritten Modul-Teilschlüssel enthält und wobei mit den Sicherheitssensoren eine Manipulation und/oder Beschädigung des Gehäuses detektiert wird und daraufhin zumindest ein Modul-Teilschlüssel vernichtet oder verändert wird.

Die Erfindung geht dabei zunächst einmal von der Erkenntnis aus, dass selbst große Mengen sensibler Daten, wie z. B. Firmware, Software, Schlüsseln oder anderer Parameter auf einem oder mehreren herkömmlichen Speicherbausteinen gesichert werden können, wenn ein solcher Speicherbaustein innerhalb eines fest verschlossenen Gehäuses angeordnet und in diesem Gehäuse darüber hinaus eine fest installierte Geräte-Chipkarte integriert ist. Die Daten sind dabei in dem Speicher mittels eines modulintern bekannten und modulindividuellen Geheimnisses geschützt, wobei in dieses Geheimnis jedoch Anteile sowohl der Geräte-Chipkarte als auch der Nutzer-Chipkarte eingehen, so dass ein Zugriff nur möglich ist, wenn die beiden Anteile vorhanden sind. Dabei wird zunächst ein Modulschlüssel verwendet, der aus mehreren Teilschlüsseln "zusammengesetzt" ist bzw. aus mehreren Teilen berechnet wird. Für unterschiedliche Einsatzzwecke können verschiedene Modulschlüssel verwendet werden. Stets ist es zweckmäßig, wenn jeweils ein Modulschlüssel für die Verschlüsselung und folglich für die Vertraulichkeit verantwortlich ist und darüber hinaus zumindest ein weiterer Modulschlüssel für die Integrität verantwortlich ist. Ein Modulschlüssel kann folglich für die Verschlüsselung und der andere für die Berechnung der kryptografischen Prüfsummen eingesetzt werden. Dabei setzen sich die beiden Modulschlüssel jeweils aus mehreren Teilschlüsseln zusammen, die zum Teil bzw. überwiegend oder auch vollständig identisch sein können. Vorzugsweise sind die Daten folglich nicht nur "verschlüsselt", sondern darüber hinaus auch integritätsgesichert. Die Daten sind folglich in dem Speicher gesichert, d. h. neben dem Dienst Vertraulichkeit sind auch der Dienst Integrität und Authentizität gemeint. Gesicherte Daten meint folglich vorzugsweise die Berücksichtigung des Sicherheitsdienstes Vertraulichkeit, Integrität und/oder Authentizität über die Verwendung von starken Verschlüsselungsverfahren und starken kryptografischen Prüfsummen. Sowohl der Speicher als auch die Geräte-Chipkarte sind fest und unlösbar in das Gehäuse integriert, während die Nutzer-Chipkarte für einen berechtigten Zugriff unmittelbar oder mittelbar an das Sicherheitsmodul angeschlossen wird. In dem Gehäuse angeordnet bzw. in das Gehäuse integriert meint im Rahmen der Erfindung in dem von dem Gehäuse umschlossenen Innenraum angeordnet. Für den Anschluss der Nutzer-Chipkarte wobei die eingegebenen Daten mittels zumindest eines (kryptographischen) Modul-Schlüssels verschlüsselt und ggf. integritätsgesichert in dem Speicher gespeichert bzw. gesichert sind und bzw. eines entsprechenden Kartenlesers und für die Übertragung der Daten sind eine oder mehrere Schnittstellen vorhanden. Dabei können mehrere separate Schnittstellen für einerseits die Chipkarte bzw. den Chipkartenlesevorrichtungen und anderer seits die zu übertragenden Daten vorhanden sein. Solche mehreren Schnittschnellen können aber in einer einzigen Steckverbindung o. dgl. zusammengefasst sein. Die Funktionen können jedoch auch von einer einzigen (hardwarebasierten) Schnittstelle übernommen werden. Durch besonders hohe Sicherheit zeichnet sich eine erfindungsgemäße Ausführungsform aus, bei welcher dem Gehäuse ein oder mehrere Sicherheitssensoren zugeordnet sind, welche mit einem in dem Gehäuse angeordneten Sicherheitscontroller verbunden sind, wobei in dem Sicherheitscontroller ein dritter Modul-Teilschlüssel hinterlegt ist und wobei der Modul-Schlüssel zusätzlich diesen dritten Modul-Teilschlüssel enthält. Mit den in oder an dem Gehäuse angeordneten Sensoren ist erfindungsgemäß eine (unberechtigte) Manipulation und/oder Beschädigung des Gehäuses detektierbar, so dass daraufhin zumindest ein Modul-Teilschlüssel, z. B. der dritte Modul-Teilschlüssel vernichtet oder verändert wird. Dabei geht die Erfindung von der Erkenntnis aus, dass eine besonders hohe Sicherheit gewährleistet werden kann, wenn die Daten in dem Modul nicht nur auf der Basis der bereits beschriebenen zwei Teilschlüssel auf der Geräte-Chipkarte und der User-Chipkarte, sondern darüber hinaus auf der Basis eines dritten Teilschlüssels geschützt werden, welcher in dem Sicherheitscontroller hinterlegt ist und funktionell von der Überwachung der Sicherheitssensoren abhängt. Das erfindungsgemäße Sicherheitsmodul verfügt folglich über eine "Anti-Tamper-Sensorik und -Auswertung", da für den Zugriff auf die sensiblen Daten bzw. für deren Entschlüsselung der sich aus zumindest drei Teilschlüsseln zusammensetzende Modul-Schlüssel benötigt wird. Es wird folglich nach einem "Split-Secret-Verfahren" gearbeitet, wobei in das modulintem bekannte, modulindividuelle Geheimnis zumindest drei Anteile, nämlich einerseits der Anteil der Geräte-Chipkarte, andererseits der Anteil der Nutzer-Chipkarte sowie schließlich der Anteil eingehen, welcher in dem Anti-Tamper-Controller hinterlegt ist. Nur bei Vorhandensein aller dieser drei Anteile ist ein berechtigter Zugriff möglich. In diesem Zusammenhang ist es zweckmäßig, wenn in dem Sicherheitscontroller ein Auswerteverfahren hinterlegt ist, mit welchem eine permanente und dauerhafte Überprüfung sowie Auswertung der Sensorsignale erfolgt. Sofern versucht wird, das Sicherheitsmodul zu manipulieren, z. B. mit Gewalt zu öffnen, reagieren die Sensoren, so dass über den Sicherheitscontroller die Möglichkeit besteht, einen Teilschlüssel, und insbesondere den dritten Teilschlüssel zu vernichten oder zu verändern, so dass dann insgesamt kein Zugriff auf die Daten mehr möglich ist. In bevorzugter Weiterbildung besteht auch die Möglichkeit, im Falle eines solchen Angriffs mehrere oder auch sämtliche Teilschlüssel und/oder die gesicherten Daten selbst ganz oder teilweise zu löschen.

Nach einem weiteren Vorschlag der Erfindung ist vorgesehen, dass in das Gehäuse eine interne Stromversorgung fest installiert ist. Bei einer derartigen Stromversorgung kann es sich um eine nicht aufladbare Batterie handeln. Vorzugsweise ist ein aufladbarer Akku vorgesehen, welcher stets oder zumindest zeitweise aufladbar ist. Dann ist es zweckmäßig, wenn bei Unterbrechung der Stromversorgung, z. B. im Falle eines Angriffs oder auch bei Entwendung des Moduls und abnehmender Stromversorgung eine Vernichtung jedenfalls eines Teilschlüssels erfolgt. Sofern die Stromversorgung ausreicht, besteht ferner die Möglichkeit, dass mehrere Teilschlüssel oder auch sämtliche Daten gelöscht werden. Jedenfalls ist gewährleistet, dass bei vollständiger Unterbrechung der Stromversorgung die Daten nicht mehr verfügbar sind, da zuvor zumindest einer der Teilschlüssel vernichtet wurde.

Gegenstand der Erfindung ist auch ein Verfahren zur Eingabe von Daten in ein Sicherheitsmodul der beschriebenen Art. Dabei werden die Daten zunächst außerhalb des Moduls (in einer gesicherten Umgebung) mittels eines Transportschlüssels oder mehrerer Transportschlüssel verschlüsselt und mit einer Signatur versehen. Anschließend werden die Daten an das Modul übertragen und in dem Modul mittels des in dem Modul gesichert hinterlegten und temporär berechneten Transportschlüssels entschlüsselt und verifiziert. Gleichzeitig oder danach werden die entschlüsselten Daten mittels des in dem Modul temporär berechneten Modulschlüssels (oder mehrerer Modulschlüssel) verschlüsselt und mit kryptografischen Prüfsummen versehen. Die so verschlüsselten bzw. gesicherten Daten werden in dem modulinternen Speicher abgelegt. Dabei geht die Erfindung von der Erkenntnis aus, dass es zweckmäßig ist, die zunächst außerhalb des Sicherheitsmoduls vorliegenden sensiblen Daten auf dem "Transportweg" zu sichern, und zwar mit dem bzw. den genannten Transportschlüssel(n). Transportschlüssel können ebenfalls auf der im Sicherheitsmodul fest integrierten Geräte-Chipkarte hinterlegt sein. Beim Laden in das Modul werden die Daten durch die Geräte-Chipkarte entschlüsselt und verifiziert. Es besteht jedoch auch die Möglichkeit, dass die Geräte-Chipkarte nur die Transportschlüssel und ausgewählte Datencontainer (kleine Datencontainer) entschlüsselt. Die Entschlüsselung größerer Datensätze kann auf einem zusätzlich in dem Gehäuse angeordneten Controller stattfinden. Nach erfolgreicher Prüfung werden die Daten dann mit dem beschriebenen nur modulintem bekannten und modulindividuellen Modulschlüssel geschützt und innerhalb des Moduls abgelegt. Im Rahmen der Erfindung wird folglich zwischen einerseits dem bzw. den Transportschlüssel(n) und andererseits dem bzw. den Modulschlüssel(n) unterschieden. Die Zugriffsrechte auf die Daten werden dann abhängig von weiteren, jeweils externen zuzuführenden Nutzer-Chipkarten verwaltet und in Form eines internen kryptographischen Dateisystems umgesetzt. Dabei besteht grundsätzlich die Möglichkeit, dass der Transportschlüssel ebenfalls aus zumindest zwei, vorzugsweise zumindest drei Transport-Teilschlüsseln zusammengesetzt ist. Dabei kann ein erster Transport-Teilschlüssel auf der Geräte-Chipkarte und ein zweiter Transport-Teilschlüssel auf einer Nutzer-Chipkarte hinterlegt sein. Bei dieser Nutzer-Chipkarte handelt es sich um eine solche, die ein Nutzer, z. B. der Administrator, benötigt, um die Daten in dem Sicherheitsmodul zu sichern. Ferner kann ein dritter Transport-Teilschlüssel vorgesehen sein, welcher in dem Sicherheitscontroller bzw. Anti-Tamper-Controller hinterlegt ist. Die sensitiven Daten werden folglich auch auf dem Transportweg von der herausgebenden Stelle zum Modul auf Basis mehrerer Teilschlüssel geschützt. Zwei Teilschlüssel können sich im Modul selbst befinden, nämlich auf der Geräte-Chipkarte und in dem Anti-Tamper-Controller. Ein weiterer Teilschlüssel kann auf der Nutzer-Chipkarte gespeichert sein. Vorzugsweise werden alle diese Teilschlüssel zum "Laden" der sensitiven Daten und folglich zum Eingeben der Daten in das Modul benötigt. Die Teilschlüssel werden nur temporär für den Ladeprozess, d. h. für den Eingabeprozess, in der Geräte-Chipkarte zusammengeführt. Beim Eingeben bzw. Laden in das Modul werden die Daten unter Verwendung des Transportschlüssels durch die Geräte-Chipkarte bzw. modul-intern entschlüsselt und die Integrität und Authentizität der Daten geprüft. Nach erfolgreicher Prüfung werden die Daten unter Verwendung des nur modulintern bekannten modulindividuellen Modulschlüssels geschützt und innerhalb des Moduls abgelegt. Der Modulschlüssel kann - wie bereits beschrieben - aus mehreren Teilschlüsseln, z. B. drei Teilschlüsseln zusammengesetzt sein. Es ist im Übrigen nicht erforderlich, dass der Transportschlüssel aus mehreren Teilschlüsseln zusammengesetzt ist bzw. berechnet wird. Tatsächlich kann der Transportschlüssel - über den Modulschlüssel gesichert - in dem Modul abgespeichert werden. Insbesondere steht der Transportschlüssel innerhalb des Moduls erst nach Berechnung des Modulschlüssels aus den Modulteilschlüsseln zur Verfügung.

Ferner ist Gegenstand der Erfindung auch ein Verfahren zur Ausgabe von Daten aus einem Sicherheitsmodul der beschriebenen Art. Dabei authentisiert sich ein Nutzer mittels einer Nutzer-Chipkarte gegenüber dem Sicherheitsmodul. Die gesicherten Daten oder ein Teil der gesicherten Daten werden in Abhängigkeit von der Zugriffsberechtigung des jeweiligen Nutzers entschlüsselt, die Integrität geprüft und ausgegeben, wobei die Daten mittels des Modulschlüssels entschlüsselt werden, welcher sich aus zumindest einem ersten Teilschlüssel, einem zweiten Teilschlüssel und vorzugsweise einem dritten Teilschlüssel zusammensetzt. Dabei kann es sich um die beschriebenen Modul-Teilschlüssel handeln, die in der Geräte-Chipkarte, in der Nutzer-Chipkarte sowie ggf. in dem Sicherheitscontroller hinterlegt sind. Die Identifizierung des Nutzers erfolgt vorzugsweise mit Hilfe einer Nutzer-Chipkarte, die als SmartCard mit persönlicher Bindung über einen PIN ausgebildet ist.

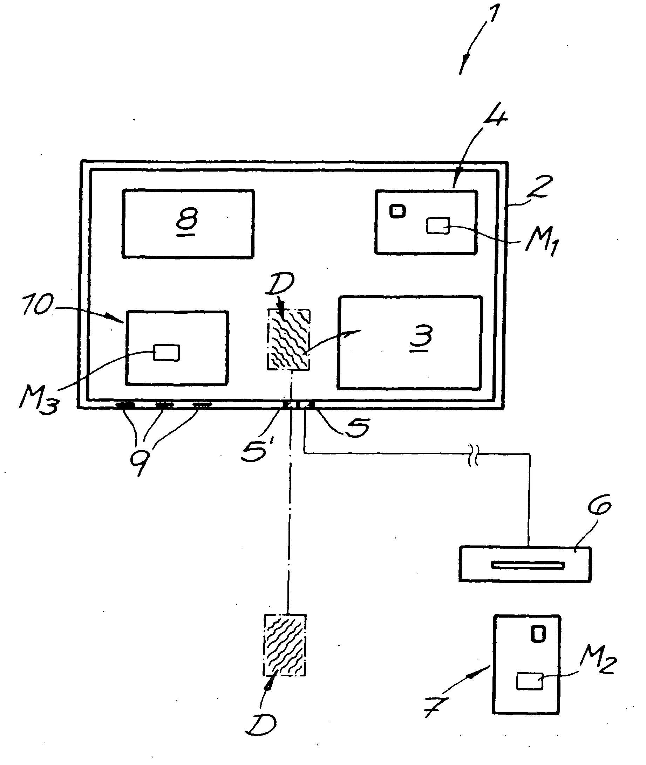

Im Folgenden wird die Erfindung anhand einer lediglich ein Ausführungsbeispiel darstellenden Zeichnung näher erläutert. Die einzige Zeichnung zeigt schematisch ein erfindungsgemäßes Sicherheitsmodul 1, welches eine gesicherte Verwahrung sensibler bzw. vertraulicher und folglich schützenswerter Daten ermöglicht. Bei diesen Daten kann es sich beispielsweise um Firmware, Software oder auch um Schlüssel handeln. Ein solches Sicherheitsmodul 1 kann in eine das Sicherheitsmodul umgebende Baugruppe, z. B. einen Rechner eingebettet werden, wobei die Funktionalität einer solchen (nicht dargestellten) Baugruppe dann beispielsweise durch die in dem Sicherheitsmodul 1 gespeicherten Daten bestimmt wird. In dem Sicherheitsmodul kann folglich Software oder auch Firmware gesichert sein, welche von der umgebenden Baugruppe für den Betrieb benötigt wird. So besteht die Möglichkeit, dass es sich bei der Baugruppe um einen Rechner handelt, der beispielsweise im Zuge des "Bootens" bestimmte Software oder auch Firmware benötigt und in diesem Fall auf die in dem Sicherheitsmodul gespeicherte Software zugreift. So kann mit Hilfe des Sicherheitsmoduls z. B. ein rekonfigurierbares Funktionsbauteil, z. B. ein FPGA geladen werden.

Von besonderer Bedeutung ist die Tatsache, dass das Sicherheitsmodul 1 zunächst einmal ein fest verschlossenes Gehäuse 2 aufweist, welches einen hohen physikalischen Schutz gegen unbefugte Zugriffe gewährleistet. Innerhalb dieses Gehäuses 2 ist ein Speicher 3 angeordnet, in welchem die zu sichernden Daten gespeichert werden. Insofern kann es sich um einen oder mehrere herkömmliche Speicherbausteine handeln. Ferner ist in dem Gehäuse 2 manipulationssicher eine Geräte-Chipkarte 4 fest installiert. Diese Geräte-Chipkarte 4 kann als SmartCard ausgebildet sein. Darüber hinaus ist in der Figur angedeutet, dass das Sicherheitsmodul 1 ein oder mehrere Schnittstellen 5, 5' aufweisen. An die Schnittstelle 5 kann zunächst einmal eine Chipkarten-Lesevorrichtung 6 anschließbar sein, wobei in diese Chipkarten-Lesevorrichtung eine oder vorzugsweise auch verschiedene Nutzer-Chipkarten 7 eingesteckt werden. Die angedeutete Schnittstelle 5' dient als DatenSchnittstelle, aber auch der Eingabe und Ausgabe der zu sichernden bzw. gesicherten Daten in das Sicherheitsmodul 1 hinein bzw. aus dem Sicherheitsmodul 1 heraus. Die Nutzer-Chipkarten 7 können ebenfalls als SmartCards ausgebildet sein. Die Schnittstellen 5 und 5' können in eine einzige Steckverbindung o. dgl. integriert sein.

Ferner ist in das Sicherheitsmodul 1 eine Stromversorgungseinrichtung 8, z. B. ein Akku, integriert, welcher von außen aufladbar ist. Die Verbindung der einzelnen Bestandteile des Sicherheitsmoduls ist in der Figur nicht dargestellt.

Im Rahmen eines ersten Aspektes der Erfindung ist nun zunächst einmal vorgesehen, dass die außerhalb des Sicherheitsmoduls 1 erzeugten sensitiven Daten in das Sicherheitsmodul 1 geladen und folglich in das Sicherheitsmodul eingegeben und dort gespeichert werden. Bei den Daten kann es sich beispielsweise um Firmware oder Software handeln, welche von einer das Sicherheitsmodul umgebenden Baugruppe benötigt wird.

Dabei ist in der Figur angedeutet, dass diese Daten D in verschlüsselter Form außerhalb des Moduls vorliegen und dazu mittels eines Transportschlüssels verschlüsselt wurden. Der Ladevorgang wird beispielsweise von einem Administrator durchgeführt, welcher sich mit einer als Administrator-Karte ausgebildeten Nutzer-Chipkarte 7 gegenüber dem Sicherheitsmodul identifiziert. Die Daten D werden in das Modul geladen und dort entschlüsselt und verifiziert. Dazu wird der erforderliche gesicherte Transportschlüssel auf der Geräte-Chipkarte 4 hinterlegt bzw. temporär in der Geräte-Chipkarte entschlüsselt.

Von besonderer Bedeutung ist nun im Rahmen der Erfindung, dass die entschlüsselten und verifizierten Daten nach erfolgreicher Prüfung mit einem nur modulintem bekannten, modulindividuellen Geheimnis geschützt und innerhalb des Moduls 1 abgelegt werden. Die Daten D werden folglich mittels eines Modulschlüssels verschlüsselt bzw. gesichert und in dieser verschlüsselten bzw. gesicherten Form im Speicher abgelegt bzw. gesichert. Erfindungsgemäß setzt sich dieser Modulschlüssel nun aus mehreren Teilschüsseln M₁, M₂, M₃ zusammen, so dass sich die erfindungsgemäße hohe Zugriffssicherheit ergibt. Der Modulschlüssel bzw. deren Teilschlüssel können mit bekannten kryptographischen Verfahren erzeugt werden.

Erfindungsgemäß setzt sich der Modulschlüssel zunächst einmal aus einem ersten Modul-Teilschlüssel M₁ und einem zweiten Modul-Teilschlüssel M₂ zusammen, wobei der erste Modul-Teilschlüssel M₁ auf der Geräte-Chipkarte 4 und der zweite Modul-Teilschlüssel M₂ auf der Nutzer-Chipkarte 7 hinterlegt sind. Eine besonders hohe Sicherheit wird dadurch gewährleistet, dass darüber hinaus ein dritter Modul-Teilschlüssel M₃ vorgesehen ist, so dass sich der Modul-Schlüssel insgesamt aus drei Teilschlüsseln M₁, M₂, M₃ zusammensetzt. Dazu ist im Ausführungsbeispiel vorgesehen, dass in das Sicherheitsgehäuse 2 des Sicherheitsmoduls 1 eine Vielzahl von Sicherheitssensoren 9 integriert sind, welche mit einem in dem Gehäuse angeordneten Sicherheitscontroller 10 verbunden sind, bzw. mit einem solchen zusammenarbeiten. In diesem Sicherheitscontroller 10 ist der dritte Modul-Teilschlüssel M₃ hinterlegt. Der Modulschlüssel wird unter Verwendung starker kryptografischer Mechanismen berechnet, wobei in diesem Modulschlüssel Anteile der Geräte-Chipkarte 4, der Nutzer-Chipkarte 7 und des Sicherheitscontrollers 10 eingehen, so dass nur bei Verwendung aller drei Anteile M₁, M₂, M₃ ein Zugriff möglich ist. In diesem Zusammenhang ist von Bedeutung, dass mit den Anti-Tamper-Sensoren 9 eine unberechtigte Manipulation bzw. Schädigung des Gehäuses 2 zuverlässig detektiert wird und daraufhin zumindest ein Modul-Teilschlüssel, z. B. der dritte Modul-Teilschlüssel M₃ vernichtet oder verändert wird. Wird folglich versucht, das Gehäuse 2 aufzubrechen, aufzubohren oder anderweitig zu manipulieren, so wird dieses über die Anti-Tamper-Sensorik erkannt und der Anti-Tamper-Controller 10 löscht daraufhin zumindest einen Modul-Teilschlüssel, so dass ein Zugriff nicht mehr möglich ist. Dabei werden Manipulationen verschiedenster Art an der physikalischen Hülle 2 des Moduls 1 mit hoher Sicherheit erkannt, so z. B. mechanische oder auch chemische Manipulationen wie Bohren oder Auflösen. In dem Sicherheitscontroller 10 ist eine Auswertesoftware hinterlegt, welche eine permanente und dauerhafte Überprüfung und Auswertung der Sensorik 9 durchführt. Die Auswertesoftware berechnet über verschiedene Kennlinienfelder und Auftrittswahrscheinlichkeiten von Ereignissen der unterschiedlichen Sensoren (Ereignissignaturen) die Möglichkeit eines physikalischen Angriffs auf das Modul und löst dann einen entsprechenden Alarm aus. Die Auswertesoftware berücksichtigt dabei Langzeiteffekte, beispielsweise Kennlinienänderungen von Sensoren 9. Es werden permanent redundante Selbsttestfunktionen durchgeführt, die zur Erkennung von Sensorausfällen dient. Die in der Figur angedeutete Stromversorgung 8 kann als mehrstufige innere Stromversorgung ausgebildet sein, um eine autonome Selbstüberwachung zu gewährleisten.

Innerhalb des Moduls 1 erfolgt im Rahmen der Erfindung eine eigenständige Verwaltung und Sicherung der Daten D bezüglich Zugriffsrechten, Vertraulichkeit und Integrität. Dabei kann ein mehrstufiges Schlüsselmanagement vorgesehen sein, welches einen einfachen Schlüsselwechsel und Bildung unterschiedlicher administrativer Domains ermöglicht. Die im Gerät fest installierte Geräte-SmartCard 4 bildet gleichsam einen Sicherheitsanker für das gesamte System. Interne Verschlüsselung bzw. Umschlüsselung ist möglich, um Zugriffsschutz selbst bei physikalischen Angriffen zu gewährleisten. Das System ermöglicht ein schnelles "Unbrauchbarmachen" im Falle von Angriffen auf das Modul. Es muss lediglich ein interner Schlüssel bzw. Teilschlüssel gelöscht werden, so dass es nicht erforderlich ist, umfangreiche Daten im Speicher zu überschreiben. Grundsätzlich besteht jedoch auch die Möglichkeit, sämtliche Daten zu löschen bzw. zu überschreiben. Dabei kann im Rahmen des Moduls 1 ein Benutzer-, Schlüssel- und Lifecycle-Management erfolgen, welches die Identifizierbarkeit bzw. Adressierbarkeit eines Moduls während verschiedener Phasen seines Lebenszyklusses sichert. Dabei ist ein zeitgesteuerter Zugriffsschutz möglich, das heißt die Gültigkeitsdauer von Zugriffsrechten kann eingestellt werden, so dass die Verwendbarkeitsdauer von sensiblen Daten durch bestimmte Benutzer eingestellt werden kann.

Ferner empfiehlt es sich, den Aufbau des Gehäuses 2 als gleichsam Schutzhülle und die Anordnung der Bauteile so vorzusehen, dass Manipulationen vermieden werden. Dieses gelingt durch messresistentes Schaltungs- und Firmwaredesign. Es wird üblicherweise mit mehrlagigen Leiterplatten, einer Verdeckung von Bauelementen sowie einer sehr engen Bestückung gearbeitet. Dabei empfiehlt sich der Einsatz von BGA-Bauelementen, deren innen liegenden Kontaktreihen nur schwer kontaktiert werden können. Über Secure Messaging werden sichere Kommunikationskanäle zwischen den Bauelementen erzeugt.

Das Ausführungsbeispiel wurde anhand eines Modulschlüssels und eines Transportschlüssels erläutert. Es kann jedoch - wie erläutert - zweckmäßig sein, wenn mehrere (z. B. zwei) Modulschlüssel und mehrere (z. B. zwei) Transportschlüssel verwendet werden.

## Patentansprüche

1. Verfahren zur gesicherten Verwahrung von Daten, wobei ein Sicherheitsmodul (1) eingesetzt wird, das zumindest ein fest verschlossenes Gehäuse (2) und zumindest einen in dem Gehäuse (2) angeordneten Speicher (3) für die zu verwahrenden Daten (D) sowie zumindest eine in dem Gehäuse (2) fest installierte Geräte-Chipkarte (4) aufweist,
wobei an eine in oder an dem Gehäuse (2) angeordnete Schnittstelle (5) eine Chipkarten-Lesevorrichtung (6) angeschlossen wird, in welche eine oder mehrere Nutzer-Chipkarten (7) einsteckbar sind, wobei über eine Schnittstelle (5') Daten nach Überprüfung ihrer Authentizität, Integrität und/oder Vertraulichkeit in den Speicher (3) eingegeben und über welche in dem Speicher (3) gesicherten Daten (D) nach Überprüfung der Nutzerberechtigung ausgegeben werden,
wobei die eingegebenen Daten (D) mittels zumindest eines Modulschlüssels verschlüsselt bzw. gesichert in dem Speicher (3) gespeichert werden,
wobei der Modulschlüssel aus zumindest einem auf der Geräte-Chipkarte (4) hinterlegten ersten Modul-Teilschlüssel (M₁) und einem auf der Nutzer-Chipkarte (7) hinterlegten zweiten Modul-Teilschlüssel (M₂) zusammengesetzt ist,
wobei dem Gehäuse (2) ein oder mehrere Sichefieitssensoren (9) zugeordnet sind, welche mit einem in dem Gehäuse (2) angeordneten Sicherheitscontroller (10) verbunden sind, wobei in dem Sicherheitscontroller (10) ein dritter Modul-Teilschlüssel (M₃) hinterlegt ist und wobei der Modulschlüssel zusätzlich diesen dritten Modul-Teilschlüssel (M₁, M₂, M₃) enthält und
wobei mit den Sicherheitssensoren (9) eine Manipulation und/oder Beschädigung des Gehäuses detektiert wird und daraufhin zumindest ein Modul-Teilschlüssel (M₁, M₂, M₃) vernichtet oder verändert wird.

2. Verfahren nach Anspruch 1, wobei der dritte Modul-Teilschlüssel (M₃) bei Detektion einer Manipulation und/oder Beschädigung des Gehäuses (2) vernichtet oder verändert wird.

3. Verfahren nach einem der Ansprüche 1 oder 2, wobei in dem Sicherheitscontroller (10) ein Auswerteverfahren hinterlegt ist, mit welchem eine permanente und dauerhafte Überprüfung und Auswertung der Sensorsignale der Sicherheitssensoren (9) durchgeführt wird.

4. Verfahren nach einem der Ansprüche 1 bis 3, wobei in dem Gehäuse (2) eine interne Stromversorgung (8), z. B. eine Batterie und/oder ein aufladbarer Akku, fest installiert ist.

5. Verfahren nach einem der Ansprüche 1 bis 4, wobei die Nutzer-Chipkarten (7) über einen Nutzer-Pin gesichert sind.

6. Verfahren nach einem der Ansprüche 1 bis 5, wobei die Daten zur Eingabe in das Sicherheitsmodul zunächst außerhalb des Moduls mittels zumindest eines Transportschlüssels verschlüsselt und gegebenenfalls mit einer Signatur versehen werden,
wobei die Daten anschließend an das Modul übertragen und in dem Modul mittels des in dem Modul gesichert hinterlegten bzw. temporär berechneten Transportschlüssels entschlüsselt und verifiziert werden und
wobei die entschlüsselten Daten zugleich oder danach mittels des in dem Modul hinterlegten bzw. temporär berechneten Modulschlüssels verschlüsselt bzw. gesichert und diese verschlüsselten bzw. gesicherten Daten in dem Speicher abgelegt werden.

7. Verfahren nach einem der Ansprüche 1 bis 6, wobei sich ein Nutzer zur Ausgabe von Daten aus dem Sicherheitsmodul mittels einer Nutzer-Chipkarte gegenüber dem Sicherheitsmodul identifiziert, wobei die Daten oder ein Teil der Daten in Abhängigkeit von der Zugriffsberechtigung des jeweiligen Nutzers entschlüsselt und ausgegeben werden und
wobei die Daten mittels des Modul-Schlüssels entschlüsselt werden, welcher sich zumindest aus dem ersten Modul-Teilschlüssel und dem zweiten Modul-Teilschlüssel sowie zusätzlich aus dem dritten Modul-Teilschlüssel zusammensetzt.

## Claims

1. Method for secure safekeeping of data, wherein a security module (1) is used which has at least one permanently closed housing (2) and at least one memory (3) which is arranged in the housing (2) for the data (D) to be kept and at least one device chip card (4) which is permanently installed in the housing (2),
wherein a chip card reading device (6) is connected to an interface (5) which is arranged in or on the housing (2), into which chip card reading device one or a plurality of user chip cards (7) can be inserted, wherein data is input into the memory (3) after being checked for authenticity, integrity and/or confidentiality via an interface (5'), via which data (D) which is secured in the memory (3) is output after the user authorisation has been checked,
wherein the input data (D) is stored in the memory (3) such that it is coded or secured by means of at least one module code,
wherein the module code is composed of at least one first module subcode (M₁) which is stored on the device chip card (4) and a second module subcode (M₂) which is stored on the user chip card (7),
wherein the housing (2) is assigned one or a plurality of security sensors (9) which are connected to a security controller (10) which is arranged in the housing (2), wherein a third module subcode (M₃) is stored in the security controller (10) and wherein the module code additionally contains this third module subcode (M₁, M₂, M₃), and
wherein manipulation of and/or damage to the housing is detected with the security sensors (9) and thereupon at least one module subcode (M₁, M₂, M₃) is destroyed or changed.

2. Method according to Claim 1, wherein the third module subcode (M₃) is destroyed or changed when manipulation of and/or damage to the housing (2) is detected.

3. Method according to one of Claims 1 or 2, wherein an evaluation process is stored in the security controller (10), with which process permanent monitoring and evaluation of the sensor signals of the security sensors (9) are carried out.

4. Method according to one of Claims 1 to 3, wherein an internal power supply (8), for example a non-rechargeable and/or a rechargeable battery, is permanently installed in the housing (2).

5. Method according to one of Claims 1 to 4, wherein the user chip cards (7) are secured by means of a user PIN.

6. Method according to one of Claims 1 to 5, wherein the data for inputting into the security module is first encoded outside the module by means of at least one transporting code and where necessary provided with a signature,
wherein the data is then transferred to the module and decoded and verified in the module by means of the transporting code which is stored in a secure manner in the module and temporarily calculated, and wherein the decoded data is at the same time or subsequently encoded or secured by means of the module code which is stored or temporarily calculated in the module, and this encoded or secured data is stored in the memory.

7. Method according to one of Claims 1 to 6, wherein a user identifies himself to the security module by means of a user chip card in order to output data from the security module, wherein the data or part of the data is decoded and output as a function of the access authorisation of the respective user, and
wherein the data is decoded by means of the module code, which is composed at least of the first module subcode and the second module subcode and additionally of the third module subcode.

## Revendications

1. Procédé pour la sauvegarde sécurisée de données, utilisant un module de sécurité (1) comportant au moins un boîtier fermé (2) et au moins une mémoire (3) disposée dans le boîtier (2), pour les données à sauvegarder (D), ainsi qu'au moins une carte à puce d'appareil (4) installée fixement dans le boîtier (2),
dans lequel un dispositif de lecture de cartes à puce (6) est connecté à une interface (5) disposée dans ou sur le boîtier (2), dans lequel peuvent être insérées une ou plusieurs cartes à puce d'utilisateur (7), dans lequel une interface (5') permet de transférer des données vers la mémoire (3), après vérification de leur authenticité, de leur intégrité et/ou de leur confidentialité, et d'éditer des données sécurisées (D) dans la mémoire (3), après vérification de l'authentification de l'utilisateur,
dans lequel les données saisies (D) sont cryptées ou sauvegardées de manière sécurisée dans la mémoire (3), au moyen d'au moins une clé de module,
dans lequel la clé de module est composée d'au moins une première clé partielle de module (M₁) enregistrée sur la carte à puce d'appareil (4), et d'une deuxième clé partielle de module (M₂) enregistrée sur la carte à puce d'utilisateur (7),
dans lequel un ou plusieurs détecteurs de sécurité (9) sont attribués au boîtier (2), lesquels sont reliés à un contrôleur de sécurité (10) disposé dans le boîtier (2), une troisième clé partielle de module (M₃) étant enregistrée dans le contrôleur de sécurité (10), et la clé de module contenant en outre cette troisième clé partielle de module (M₁, M₂, M₃), et dans lequel une manipulation et/ou un endommagement du boîtier est détecté à l'aide des détecteurs de sécurité (9), entraînant ainsi la destruction ou la modification d'au moins une clé partielle de module (M₁, M₂, M₃).

2. Procédé selon la revendication 1, dans lequel la troisième clé partielle de module (M₃) est détruite ou modifiée lors de la détection d'une manipulation et/ou d'un endommagement du boîtier (2).

3. Procédé selon l'une des revendications 1 ou 2, dans lequel un procédé d'évaluation est enregistré dans le contrôleur de sécurité (10), permettant d'effectuer une vérification et une évaluation permanentes et durables des signaux de détection des détecteurs de sécurité (9).

4. Procédé selon l'une des revendications 1 à 3, dans lequel une alimentation en courant interne (8), par exemple une batterie et/ou un accumulateur rechargeable, est installée fixement dans le boîtier (2).

5. Procédé selon l'une des revendications 1 à 4, dans lequel les cartes à puce d'utilisateur (7) sont sécurisées par code pin d'utilisateur.

6. Procédé selon l'une des revendications 1 à 5, dans lequel les données pour la saisie dans le module de sécurité sont tout d'abord cryptées au moyen d'au moins une clé de transport, et le cas échéant dotées d'une signature,
dans lequel les données sont ensuite transmises au module, et décryptées et vérifiées dans le module, au moyen de la clé de transport enregistrées de façon sécurisée dans le module ou prévue temporairement, et
dans lequel les données décryptées sont ensuite ou dans le même temps cryptées ou sécurisées au moyen de la clé de module enregistrée dans le module ou prévue temporairement, et ces données cryptées ou sécurisées sont déposées dans la mémoire.

7. Procédé selon l'une des revendications 1 à 6, dans lequel un utilisateur s'identifie par rapport au module de sécurité au moyen d'une carte à puce d'utilisateur, pour l'édition de données à partir du module de sécurité, les données ou une partie des données étant décryptés et éditées en fonction des droits d'accès de chaque utilisateur, et
dans lequel les données sont décryptées au moyen de la clé de module, qui se compose au moins de la première clé partielle de module et de la deuxième clé partielle de module, ainsi que de la troisième clé partielle de module.
